# EUROPEAN PATENT SPECIFICATION

(11) **EP 1 982 505 B1**
(45) Date of publication and mention of the grant of the patent: **25.04.2018**
(21) Application number: 07700294.7
(22) Date of filing: 19.01.2007
(51) Int. Cl.: H04L 29/08, H04L 12/28, H04L 29/12, H04L 29/06, H04W 76/04

(54) **METHOD FOR MAINTAINING CONNECTION IN TELECOMMUNICATIONS SYSTEM AND TELECOMMUNICATIONS SYSTEM**
VERFAHREN ZUR AUFRECHTERHALTUNG DER VERBINDUNG IN EINEM TELEKOMMUNIKATIONSSYSTEM UND TELEKOMMUNIKATIONSSYSTEM
PROCÉDÉ DE MAINTIEN DE CONNEXION DANS UN SYSTÈME DE TÉLÉCOMMUNICATION ET SYSTÈME DE TÉLÉCOMMUNICATION

(30) Priority: 20.01.2006 FI 20065041
(43) Date of publication of application: 22.10.2008
(73) Proprietor: Telia Company AB, 169 94 Solna (SE)
(72) Inventor: SVAHNSTRÖM, Niclas, FI-00250 Helsinki (FI); HUOVIALA, Rauno, FI-90100 Oulu (FI); AALTO, Olli, FI-01200 Vantaa (FI)
(74) Representative: Kolster Oy Ab
(86) International application number: PCT/FI2007/050029
(87) International publication number: WO 2007/083000

(56) References cited:
- EP-A1- 1 569 404
- EP-A1- 1 569 404
- WO-A2-02/103981
- US-B1- 6 212 175
- US-B1- 6 212 175
- US-B1- 6 405 262

## Description

### FIELD OF THE INVENTION

The present invention relates to maintaining a connection in a telecommunications system.

### BACKGROUND OF THE INVENTION

In packet switched telecommunications systems, in which data is transmitted by means of addressed packets, a transmission channel is occupied only for the duration of transmission of the packet. A connection set up between two parties in a packet switched system is typically active, i.e. the resources allocated for the connection remain that way for a certain predetermined period of time even if packets are not constantly transmitted. After the predetermined period of time after the last transmission of a data packet, the connection is torn down and the resources are released. The term connection in this context should be understood to generally mean a virtual circuit or a transmission opportunity which is set up between two or more points, and to include session type connections such as various multimedia, call and other communications sessions activated by using e.g. SIP (Session Initiation Protocol) over TCP (Transmission Control Protocol) or UDP (User Datagram Protocol), which are used in combination with Internet Protocol (IP).

In order to maintain a connection active for a longer time than the predetermined time period when no active data transfer takes place between the parties of the connection, so called keep-alive messages can be sent between the parties through the connection. Depending on the particular system, a keep-alive message is typically a message containing only a message header and dummy data. Another reason for sending keep-alive messages is that in many systems one or more firewalls may be provided in the connection between the parties, and firewalls typically close a connection through them after a certain period of time. For example, a UDP connection may be closed after only about 40 s.

Document WO 02/103981 discloses an example of a system in which above-described keep-alive messages are communicated between two terminal devices in order to keep a signaling path active between the terminal devices.

One of the problems associated with sending such keep-alive messages relates to a situation in which one of the parties communicating with each other is a wireless terminal, such as a mobile phone or a PDA (Personal Digital Assistant) device. As an example, a wireless terminal may use a service or an application, such as instant messaging, PoC (Push to talk over Cellular) or Video Sharing, which is provided over a wireless access interface by an application server or a similar instance. This kind of services/applications may need to be active for a long time, which increases consumption of energy from a wireless terminal battery. This is because the connection must be kept active with keep-alive messages, which must be sent regularly from the wireless terminal to the instance or party providing the service, and sending these messages consumes the energy of the battery. Considering that the battery capacity of such devices is often limited, the additional energy consumption caused by sending keep-alive messages may be considerable. In addition, sending keep-alive messages over the wireless access interface reserves capacity from the interface, may generate a larger bill for the user of the wireless terminal, and needs to be implemented in every application in the wireless terminal which uses the services over the wireless access interface.

Document EP 1569404 discloses a system and a method for maintaining a network connection between a client and a web-server via a wireless link between the client and a wireless base station. In the solution disclosed the base station may send keep-alive packets on behalf of the client to free up resources on the client and the wireless link.

### BRIEF DESCRIPTION OF THE INVENTION

An object of the present invention is thus to provide a method and an apparatus for implementing the method so as to overcome the above problems or at least to alleviate them. The objects of the invention are achieved by a method, a telecommunications system, an apparatus, and a computer program product which are characterized by what is stated in independent claims 1, 7, 17 and 20. Preferred embodiments of the invention are disclosed in the dependent claims.

The invention is based on the idea of detecting, in a system element located between a wireless access interface and a second party, setting up of a connection between a first party, which is a wireless terminal, and the second party, and sending keep-alive messages from said system element to the second party after detecting the setting up of the connection.

An advantage of the invention is that when the keep-alive messages are sent from a system element located on the network side of the wireless access interface, instead of the wireless terminal, the energy consumption of the wireless terminal can be reduced while still keeping the connection active and possible firewalls open. Another advantage is that the resources of the wireless access interface can be saved for other purposes as keep-alive messages need not be sent over the wireless access interface.

### BRIEF DESCRIPTION OF THE DRAWINGS

In the following, the invention will be described in greater detail by means of preferred embodiments with reference to the accompanying drawings, in which
Figure 1 is a block diagram showing a telecommunications system according to an embodiment of the invention; and
Figure 2 is a signalling diagram according to an embodiment of the invention.

### DETAILED DESCRIPTION OF THE INVENTION

The present invention can be applied in connection with various telecommunication systems providing a wireless access. Such systems include e.g. WLAN (Wireless Local Area Network), GPRS (General Packet Radio Service), EGPRS (enhanced GPRS) and third generation mobile communication systems, such as UMTS (Universal Mobile Telecommunications System). The specifications of mobile communication systems, and those of the third generation mobile communication systems in particular, are advancing rapidly. Consequently, the invention may require additional changes. All words and expressions should therefore be interpreted broadly since they are only intended to illustrate, not to restrict, the invention.

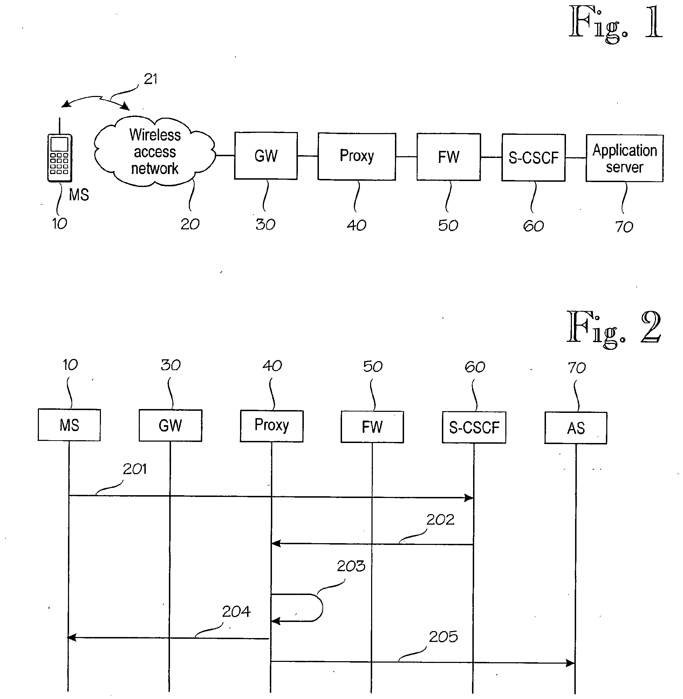

Figure 1 illustrates an example of a telecommunications system according to an embodiment of the invention. It is to be noted that, for the sake of clarity, the figure only shows components relevant to the understanding of the invention. The system of Figure 1 shows a wireless access network 20, such as WLAN, GPRS, EGPRS or UMTS, providing a wireless access interface 21 for one or more wireless terminals 10, such as a mobile phones (MS) or a PDA devices or any other wireless devices. The system of Figure 1 further comprises a gateway (GW) 30, such as GGSN (Gateway GPRS Support Node), which acts as a gateway between a GPRS network and a packet-switched public data network (PSPDN). The wireless access network 20 is typically connected to a backbone network and other networks, such as the Internet (not shown). Elements 40 to 70 in Figure 1 may belong to an IP multimedia subsystem (IMS), for example. The IP multimedia subsystem provides e.g. various multimedia services based on and built upon Internet applications, services, and protocols.

Figure 1 further shows an S-CSCF (Serving Call State Control Function) element 60. The controlling element S-CSCF 60 controls call establishment and is responsible for routing calls. A CSCF in general provides call control, session control and service control for user terminals 10. The CSCF comprises call state models, which are used for controlling call establishment with other network nodes. The associated signalling may be based on a Session Initiation Protocol (SIP), for example. The Session Initiation Protocol developed by IETF (Internet Engineering Task Force) is an application-layer control (signaling) protocol for creating, modifying and terminating sessions with one or more participants. These sessions include Internet multimedia conferences, IP telephony calls and multimedia distribution. The invention is not, however, restricted to SIP based systems but e.g. H.323, standardized by the International Telecommunications Union (ITU), could be used. The S-CSCF 60 is the network node in which user equipment 10 is registered and via which the signaling is transferred. It should be noted that the location of the call state control function in the system may vary; it may reside in a separate element or be located in connection with another element, for example. Within this application the term "controlling element" generally refers to an element or entity controlling a call, the S-CSCF 60 being merely an example of such an element. The S-CSCF can also communicate with one or more application servers 70, such as SIP application servers. The application servers 70 may be located within the IMS and connected directly to the S-CSCF 60, or alternatively be located in an external network and be connected e.g. via the Internet. The application servers 70 can host and execute various services, such as instant messaging, PoC (Push to talk over Cellular) or Video Sharing, which can be provided to wireless terminals 10 connected to the system.

When the wireless terminal 10, or an application in the wireless terminal 10, wishes to utilize a service provided by the application server 70, a connection for that purpose is set up between the wireless terminal 10 and the application server 70. In the exemplary system of Figure 1, this can be carried out by registering the wireless device with the S-CSCF 60 by using SIP over TCP or UDP. Once the connection is set up, it must be maintained active by sending keep-alive messages to the application server 70. According to an embodiment of the invention, when a connection is being set up between a first party, such as the wireless terminal 10, and a second party, such as the application server 70 or a similar instance, through the wireless access interface 21, the setting up of the connection is detected in a system element 40 located between the wireless access interface 21 and the second party, and keep-alive messages are sent from said system element 40 to the second party after detecting the setting up of the connection. The system element 40, with which the functionality of the invention may be implemented, can be a separate system element, such as a proxy 40 as shown in Figure 1, or it can be integrated into another system element, such as a gateway 30. Said system element 40 could also be located within the wireless access network 20. In the following description, said element 40 is referred to as a proxy. Thus, according to an embodiment of the invention, the proxy 40 preferably monitors e.g. the SIP signalling going through it and detects when a connection, such as a SIP session, is set up between the wireless terminal 10 and another party, such as the application server 70 or a corresponding element of the telecommunications system or connected thereto. The proxy 40 can obtain the necessary session information, such as IP address(es) and TCP or UDP port numbers, from the SIP signalling. After detecting the setting up of the connection, the proxy 40 starts sending keep-alive messages to the application server 70, thus maintaining the connection between the wireless terminal 10 and the application server 70 active.

According to an embodiment of the invention, while monitoring the signalling going through it, the proxy 40 further detects the type of application and/or service which utilizes the connection being set up, and decides, on the basis of the detected application and/or service type, whether or not the sending of keep-alive messages to the application server 70 is carried out. Thus, the sending of keep-alive messages from the proxy 40 to the application server 70 may be dependent on the application or service type in question. For example, the proxy may be arranged to provide the above-described sending of keep-alive messages to the application server 70 only in connection with certain service types, such as instant messaging, PoC and/or Video Sharing, but not with other types of services or applications. The proxy 40 may comprise a predetermined list of service and/or application types to which the sending of keep-alive messages functionality is applied. The proxy may also determine the need for the functionality of sending keep-alive messages on the basis of other criteria, such as the codec and/or the ports used in the connection or any other similar criteria which may indicate the type of the application and/or service. The proxy 40 can detect the type of service or application e.g. from an SDP (Session Description Protocol) signalling. The SDP is a protocol which conveys information about media streams in multimedia sessions to allow recipients of a session description to participate in the session.

According to an embodiment of the invention, the proxy 40 can send the wireless terminal 10 instructions to not send keep-alive messages to the application server 70. In other words, the proxy can specifically instruct the wireless terminal 10 not to send any keep-alive messages to the application server 70. This can be implemented with a specific message, for example.

According to another embodiment of the invention, the proxy 40 can send the wireless terminal 10 instructions to send keep-alive messages to the application server 70 at a frequency which is lower than a minimum frequency at which keep-alive messages are required to be sent to maintain the connection. Referring now to the signalling diagram of Figure 2, an example of this embodiment of the invention is given in the following. The setting up of a connection between the wireless terminal 10 and the application server 70 preferably begins with a SIP Registration message 201 from the wireless terminal 10 to the S-CSCF 60. In the SIP Registration message 201, the wireless terminal may suggest a keep-alive time interval at which keep-alive messages should be sent. The S-CSCF 60 sends, as a response, a SIP 200 OK message 202 addressed to the wireless device 10. The response message 202 comprises a keep-alive time interval value, which is the maximum allowable time interval between two consecutive keep-alive messages to maintain the connection. In other words, said time interval value indicates the minimum frequency at which keep-alive messages are required to be sent to maintain the connection active. The keep-alive time interval value in the response message 202 may be the same as a value possibly suggested by the wireless device 10 in the SIP Registration message 201, or another value determined by the S-CSCF 60. The values that are approved by the network in question are preferably pre-configured to the S-CSCF 60. Thus, the S-CSCF 60 may change the value, particularly, if the value possibly suggested by the wireless terminal 10 is not within the pre-configured limits. The keep-alive time interval value is preferably located in an Expires field of the SIP 200 OK message. The Expires field may be inside a Contact header field or as a separate field in the message header, for example. The proxy 40 preferably analyses SIP traffic and reads the Expires field in the SIP 200 OK message 202 sent from the application server 70 and addressed to the wireless device 10. Thus, the proxy 40 obtains timing information indicating the minimum frequency at which keep-alive messages are required to be sent to maintain the connection being set up. The proxy then preferably modifies 203 the timing information in the message, i.e. the value of the Expires field, such that it indicates a frequency which is lower than a minimum frequency at which keep-alive messages are required to be sent to maintain the connection. In other words, the proxy replaces the keep-alive time interval value of the Expires field with a larger value, preferably as large as possible. Finally, the proxy 40 forwards the modified message 204 to the wireless terminal 10 and starts sending keep-alive messages 205 to the application server 70 at time intervals as determined by the S-CSCF in the SIP 200 OK message 202 or more often to maintain the connection between the wireless terminal 10 and the application server 70 active. According to an embodiment of the invention, the proxy 40 may recognize the application and/or service which uses the connection being set up and decide the frequency at which the keep-alive messages are sent to the application server 70 on the basis of the recognized application or service. Thus, the particular frequency at which the keep-alive messages are sent from the proxy 40 to the application server 70 may be dependent on the application or service in question. Also, in this case, the frequency should be at least equal to the minimum frequency indicated in the SIP 200 OK message 202 sent from the application server 70.

Since the wireless terminal 10 receives a modified message 204 having in its Expires field a time interval value larger than that originally determined by the S-CSCF 60, the wireless terminal 10 does not have to send keep-alive messages as often as would be required otherwise. In particular, if the value of the Expires field in the modified SIP 200 OK message 204 is set to be larger than the lifetime of the connection between the wireless terminal 10 and the application server 70, the wireless terminal 10 does not send any keep-alive messages during the connection. The wireless terminal can preferably move to a more efficient and battery-saving mode in the network, e.g. in UMTS this is idle. The proxy 40 is preferably stateful regarding the SIP session. The value in the Expires field is typically given in seconds and can vary between 0 and 2³²-1 s, for example. A default value is typically 3600 s, which is used if no Expires value is given or if the value given is not valid. SIP and the headers used in SIP messages are defined in document: Request For Comments 3261 (RFC3261) entitled "SIP: Session Initiation Protocol" by The Internet Society (ISOC).

When the connection between the wireless terminal 10 and the application server 70 is torn down, the proxy 40 preferably detects this event from the SIP signalling going through it and stops sending keep-alive messages 205 to the application server 70.

According to an embodiment of the invention, if the telecommunications system in which the invention is implemented comprises one or more firewalls 50 between the wireless access interface 21 and the application server 70, the proxy 40 is preferably located between the wireless access interface 21 and the firewall(s) 50. Thus, the proxy 40 preferably keeps the path (i.e. network address translation (NAT) port mappings, etc.) through the firewall(s) 50 open, in addition to maintaining the actual connection by sending keep-alive messages 205.

The functionality of the invention described above can be implemented by means of a computer or a controller unit or corresponding digital signal processing equipment, such as a general-purpose digital signal processor (DSP), with suitable software therein, for example. It is also possible to use a specific integrated circuit or circuits, or corresponding components and devices. The invention can be implemented in existing system elements or by using separate elements or devices. If the functionality of the invention is implemented by software, such software can be provided as a computer program product comprising computer program code which, when run on a computer, causes the computer or corresponding device to perform the functionality according to the invention as described above. Such a computer program code can be stored on a computer readable medium, such as suitable memory means, e.g. a flash memory or a disc memory, from which it is loadable to the unit or units executing the program code. In addition, such a computer program code implementing the invention can be loaded to the unit or units executing the computer program code via a suitable data network, for example, and it can replace or update a possibly existing program code.

It will be obvious to a person skilled in the art that, as technology advances, the inventive concept can be implemented in various ways. The invention and its embodiments are not limited to the examples described above but may vary within the scope of the claims.

## Claims

1. A method for maintaining a connection in a telecommunications system, the method comprising:
setting up a connection between a wireless terminal (10) and another party (70), i.e. a second party, through a wireless access interface (21) provided by a wireless access network (20), and
sending keep-alive messages to the second party (70) in order to maintain the connection, **characterized in that** the method comprises:
detecting, in a system element (40) located between the wireless access interface (21) and the second party (70), the setting up of the connection between the wireless terminal (10) and the second party, wherein the detecting of the setting up of the connection comprises detecting a type of an application and/or service which uses the connection being set up, and
sending keep-alive messages from said system element (40) to the second party (70) after detecting the setting up of the connection between the wireless terminal (10) and the second party if the detected type of the application and/or service is such a predetermined application and/or service type to which the sending of keep-alive messages is applied.

2. A method as claimed in claim 1, **characterized in that** the method further comprises sending, from said system element (40) to the wireless terminal (10), instructions to not send keep-alive messages to the second party (70).

3. A method as claimed in claim 1, **characterized in that** the method further comprises sending, from said system element (40) to the wireless terminal (10), instructions to send keep-alive messages to the second party (70) at a frequency which is lower than a minimum frequency at which keep-alive messages are required to be sent to maintain the connection.

4. A method as claimed in claim 3, **characterized in that** the method further comprises:
receiving in said system element (40), upon the setting up of the connection between the wireless terminal (10) and the second party (70), a message from a system entity (60) performing call control, which message comprises timing information indicating the minimum frequency at which keep-alive messages are required to be sent to maintain the connection,
modifying in said system element (40) the timing information in the message such that it indicates a frequency which is lower than the minimum frequency at which keep-alive messages are required to be sent to maintain the connection, and
forwarding the modified message from said system element (40) to the wireless terminal (10).

5. A method as claimed in claim 4, **characterized in that** the system entity (60) performing call control comprises a call state control function, and **in that** the message from the system entity performing call control is a Session Initiation Protocol 200 OK message.

6. A method as claimed in any one of claims 1 to 5, **characterized in that** the detecting of the setting up of the connection further comprises detecting a type of an application and/or service which uses the connection being set up, wherein the sending of keep-alive messages from said system element (40) to the second party (70) is performed at a frequency which is determined on the basis of the detected type of the application and/or service.

7. A telecommunications system comprising:
a wireless access network (20) providing a wireless access interface (21) for wireless terminals (10), and
a first element (70) of the telecommunications system,
wherein a wireless terminal (10) may set up a connection to the first element (70) through the wireless access interface (21), **characterized in that** the system further comprises a second element (40) of the telecommunications system located between the wireless access interface (21) and the first element (70), wherein the second element (40) comprises:
detection means adapted to detect the setting up of the connection between the wireless terminal (10) and the first element (70), and a type of an application and/or service which uses the connection being set up, and
sending means adapted to send keep-alive messages to the first element (70) after detecting the setting up of the connection between the wireless terminal.and the first element if the detected type of the application and/or service is such a predetermined application and/or service type to which the sending of keep-alive messages is applied.

8. A telecommunications system as claimed in claim 7, **characterized in that** the second element (40) further comprises means adapted to send the wireless terminal (10) instructions to not send keep-alive messages to the first element (70).

9. A telecommunications system as claimed in claim 7, **characterized in that** the second element (40) further comprises means adapted to send the wireless terminal (10) instructions to send keep-alive messages to the first element (70) at a frequency which is lower than a minimum frequency at which keep-alive messages are required to be sent to maintain the connection.

10. A telecommunications system as claimed in claim 9, **characterized in that** the second element (40) further comprises:
means adapted to receive, upon the setting up of the connection between the wireless terminal (10) and the first element (70), a message from a system element (60) performing call control, which message comprises timing information indicating the minimum frequency at which keep-alive messages are required to be sent to maintain the connection,
means adapted to modify the timing information in the message such that it indicates a frequency which is lower than the minimum frequency at which keep-alive messages are required to be sent to maintain the connection, and
means adapted to forward the modified message to the wireless terminal (10).

11. A telecommunications system as claimed in claim 10, **characterized in that** the system element (60) performing call control comprises a call state control function, and **in that** the message from the system element performing call control is a Session Initiation Protocol 200 OK message.

12. A telecommunications system as claimed in any one of claims 7 to 11, **characterized in that**
the detection means are further adapted to detect a type of an application and/or service which uses the connection being set up, and
the sending means are adapted to send keep-alive messages to the first element at a frequency determined on the basis of the detected type of the application and/or service.

13. A telecommunications system as claimed in any one of claims 7 to 12, **characterized in that** the telecommunications system comprises a firewall (50) between the wireless access interface (21) and the first element (70), whereby the second element (40) is located between the wireless access interface (21) and the firewall (50).

14. A telecommunications system as claimed in any one of claims 7 to 13, **characterized in that** the first element (70) comprises an application server.

15. A telecommunications system as claimed in any one of claims 7 to 14, **characterized in that** the second element (40) comprises a proxy server.

16. A telecommunications system as claimed in any one of claims 7 to 15, **characterized in that** the second element (40) comprises a gateway.

17. An apparatus for a telecommunications system comprising a wireless access network (20) providing a wireless access interface (21), **characterized in that** the apparatus (40) is adapted to:
detect setting up of a connection between a first party (10) and a second party (70) through the wireless access interface (21) and a type of an application and/or service which uses the connection being set up when the apparatus (40) is connected between the wireless access interface and the second party, and
send keep-alive messages to the second party (70) after detecting the setting up of the connection between the first party (10) and the second party (70) if the detected type of the application and/or service is such a predetermined application and/or service type to which the sending of keep-alive messages is applied.

18. An apparatus as claimed in claim 17, **characterized in that** the apparatus (40) comprises a proxy.

19. An apparatus as claimed in claim 17 or 18, **characterized in that** the apparatus (40) comprises a gateway.

20. A computer program product comprising computer program code, **characterized in that** execution of the program code in a computer causes the computer to carry out the following steps:
detect setting up of a connection between a first party (10) and a second party (70) through a wireless access interface (21) and a type of an application and/or service which uses the connection being set up when the computer is connected between the wireless access interface and the second party, and
send keep-alive messages to the second party (70) after detecting the setting up of the connection between the first party (10) and the second party if the detected type of the application and/or service is such a predetermined application and/or service type to which the sending of keep-alive messages is applied.

## Patentansprüche

1. Verfahren zum Aufrechterhalten einer Verbindung in einem Telekommunikationssystem, wobei das Verfahren umfasst:
Einrichten einer Verbindung zwischen einem drahtlosen Endgerät (10) und einer anderen Partei (70), d.h. einer zweiten Partei, über eine drahtlose Zugriffsschnittstelle (21), die durch ein drahtloses Zugriffsnetzwerk (20) vorgesehen wird,
Senden von Keepalive-Nachrichten an die zweite Partei (70), um die Verbindung aufrechtzuerhalten, **dadurch gekennzeichnet, dass** das Verfahren umfasst:
Erfassen, in einem Systemelement (40), das zwischen der drahtlosen Zugriffsschnittstelle (21) und der zweiten Partei (70) angeordnet ist, des Einrichtens der Verbindung zwischen dem drahtlosen Endgerät (10) und der zweiten Partei, wobei das Erfassen des Einrichtens der Verbindung das Erfassen des Typs einer Anwendung und/oder eines Diensts, die bzw. der die eingerichtete Verbindung verwendet, umfasst, und
Senden von Keepalive-Nachrichten von dem Systemelement (40) an die zweite Partei (70) nach dem Erfassen des Einrichtens der Verbindung zwischen den drahtlosen Endgerät (10) und der zweiten Partei, wenn der erfasste Typ der Anwendung und/oder des Diensts eine derartige vorbestimmte Anwendung und/oder ein derartiger vorbestimmter Diensttyp ist, für die bzw. den das Senden von Keepalive-Nachrichten angewendet wird.

2. Verfahren nach Anspruch 1, **dadurch gekennzeichnet, dass** das Verfahren weiterhin das Senden, von dem Systemelement (40) an das drahtlose Endgerät (10), von Befehlen für das nicht-Senden von Keepalive-Nachrichten an die zweite Partei (70) umfasst.

3. Verfahren nach Anspruch 1, **dadurch gekennzeichnet, dass** das Verfahren weiterhin das Senden, von dem Systemelement (40) an das drahtlose Endgerät (10), von Befehlen für das Senden von Keepalive-Nachrichten an die zweite Partei (70) mit einer Frequenz, die niedriger als eine Mindestfrequenz, mit der Keepalive-Nachrichten gesendet werden müssen, um die Verbindung aufrechtzuerhalten, umfasst.

4. Verfahren nach Anspruch 3, **dadurch gekennzeichnet, dass** das Verfahren weiterhin umfasst:
Empfangen, in dem Systemelement (40) und nach dem Einrichten der Verbindung zwischen dem drahtlosen Endgerät (10) und der zweiten Partei (70), einer Nachricht von einer eine Anrufsteuerung durchführenden Systemeinheit (60), wobei die Nachricht Zeitinformationen enthält, die die Mindestfrequenz angeben, mit der Keepalive-Nachrichten gesendet werden müssen, um die Verbindung aufrechtzuerhalten,
Modifizieren, in dem Systemelement (40), der Zeitinformationen in der Nachricht derart, dass diese eine Frequenz angeben, die niedriger als die Mindestfrequenz ist, mit der Keepalive-Nachrichten gesendet werden müssen, um die Verbindung aufrechtzuerhalten, und
Weiterleiten der modifizierten Nachricht von dem Systemelement (40) an das drahtlose Endgerät (10).

5. Verfahren nach Anspruch 4, **dadurch gekennzeichnet, dass** die eine Anrufsteuerung durchführende Systemeinheit (60) eine Anrufzustands-Steuerfunktion aufweist und die Nachricht von der eine Anrufsteuerung durchführenden Systemeinheit eine Session Initiation Protocol 200 OK-Nachricht ist.

6. Verfahren nach einem der Ansprüche 1 bis 5, **dadurch gekennzeichnet, dass** das Erfassen des Einrichtens der Verbindung weiterhin das Erfassen des Typs einer Anwendung und/oder eines Diensts, die bzw. der die eingerichtete Verbindung verwendet, umfasst, wobei das Senden der Keepalive-Nachrichten von dem Systemelement (40) an die zweite Partei (70) mit einer Frequenz, die basierend auf dem erfassten Typ der Anwendung und/oder des Diensts bestimmt wird, durchgeführt wird.

7. Telekommunikationssystem, das umfasst:
ein drahtloses Zugriffsnetzwerk (20), das eine drahtlose Zugriffsschnittstelle (21) für drahtlose Endgeräte (10) vorsieht, und
ein erstes Element (70) des Telekommunikationssystems,
wobei ein drahtloses Endgerät (10) eine Verbindung zu dem ersten Element (70) über die drahtlose Zugriffsschnittstelle (21) einrichten kann, **dadurch gekennzeichnet, dass** das System weiterhin ein zweites Element (40) des Telekommunikationssystems, das zwischen der drahtlosen Zugriffsschnittstelle (21) und dem ersten Element (70) angeordnet ist, umfasst, wobei das zweite Element (40) umfasst:
Erfassungseinrichtungen, die ausgebildet sind zum Erfassen des Einrichtens der Verbindung zwischen dem drahtlosen Endgerät (10) und dem ersten Element (70) und des Typs einer Anwendung und/oder eines Diensts, die bzw. der die eingerichtete Verbindung verwendet, und
Sendeeinrichtungen, die ausgebildet sind zum Senden von Keepalive-Nachrichten an das erste Element (70) nach dem Erfassen des Einrichtens der Verbindung zwischen dem drahtlosen Endgerät und dem ersten Element, wenn der erfasste Typ der Anwendung und/oder des Diensts eine derartige vorbestimmte Anwendung und/oder ein derartiger vorbestimmter Diensttyp ist, für die bzw. den das Senden von Keepalive-Nachrichten angewendet wird.

8. Telekommunikationssystem nach Anspruch 7, **dadurch gekennzeichnet, dass** das zweite Element (40) weiterhin Einrichtungen umfasst, die ausgebildet sind zum Senden, an das drahtlose Endgerät (10), von Befehlen für das nicht-Senden von Keepalive-Nachrichten an das erste Element (70).

9. Telekommunikationssystem nach Anspruch 7, **dadurch gekennzeichnet, dass** das zweite Element (40) weiterhin Einrichtungen umfasst, die ausgebildet sind zum Senden, an das drahtlose Endgerät (10), von Befehlen für das Senden von Keepalive-Nachrichten an das erste Element (70) mit einer Frequenz, die niedriger ist als eine Mindestfrequenz, mit der Keepalive-Elemente gesendet werden müssen, um die Verbindung aufrechtzuerhalten.

10. Telekommunikationssystem nach Anspruch 9, **dadurch gekennzeichnet, dass** das zweite Element (40) weiterhin umfasst:
Einrichtungen, die ausgebildet sind zum Empfangen, nach dem Einrichten der Verbindung zwischen dem drahtlosen Endgerät (10) und dem ersten Element (70), einer Nachricht von einem eine Anrufsteuerung durchführenden Systemelement (60), wobei die Nachricht Zeitinformationen enthält, die die Mindestfrequenz angeben, mit der Keepalive-Nachrichten gesendet werden müssen, um die Verbindung aufrechtzuerhalten,
Einrichtungen, die ausgebildet sind zum Modifizieren der Zeitinformationen in der Nachricht derart, dass diese eine Frequenz angeben, die niedriger als die Mindestfrequenz ist, mit der Keepalive-Nachrichten gesendet werden müssen, um die Verbindung aufrechtzuerhalten, und
Einrichtungen, die ausgebildet sind zum Weiterleiten der modifizierten Nachricht an das drahtlose Endgerät (10).

11. Telekommunikationssystem nach Anspruch 10, **dadurch gekennzeichnet, dass** das eine Anrufsteuerung durchführende Systemelement (60) eine Anrufzustands-Steuerfunktion aufweist und dass die Nachricht von dem Systemelement eine Session Initiation Protocol 200 OK-Nachricht ist.

12. Telekommunikationssystem nach einem der Ansprüche 7 bis 11, **dadurch gekennzeichnet, dass**
die Erfassungseinrichtungen weiterhin ausgebildet sind zum Erfassen des Typs einer Anwendung und/oder eines Diensts, die bzw. der die eingerichtete Verbindung verwendet, und
die Sendeeinrichtungen ausgebildet sind zum Senden von Keepalive-Nachrichten an das erste Element mit einer Frequenz, die basierend auf dem erfassten Typ der Anwendung und/oder des Diensts bestimmt wird.

13. Telekommunikationssystem nach einem der Ansprüche 7 bis 12, **dadurch gekennzeichnet, dass** das Telekommunikationssystem eine Firewall (50) zwischen der drahtlosen Zugriffsschnittstelle (21) und dem ersten Element (70) umfasst, wobei das zweite Element (40) zwischen der drahtlosen Zugriffsschnittstelle (21) und der Firewall (50) angeordnet ist.

14. Telekommunikationssystem nach einem der Ansprüche 7 bis 13, **dadurch gekennzeichnet, dass** das erste Element (70) ein Anwendungsserver ist.

15. Telekommunikationssystem nach einem der Ansprüche 7 bis 14, **dadurch gekennzeichnet, dass** das zweite Element (40) ein Proxyserver ist.

16. Telekommunikationssystem nach einem der Ansprüche 7 bis 15, **dadurch gekennzeichnet, dass** das zweite Element (40) ein Gateway ist.

17. Vorrichtung für ein Telekommunikationssystem, das ein drahtloses Zugriffsnetzwerk (20) und eine durch dieses vorgesehene drahtlose Zugriffsschnittstelle (21) umfasst, wobei die Vorrichtung (40) ausgebildet ist zum:
Erfassen des Einrichtens einer Verbindung zwischen einer ersten Partei (10) und einer zweiten Partei (70) über die drahtlose Zugriffsschnittstelle (21) und des Typs einer Anwendung und/oder eines Diensts, die bzw. der die eingerichtete Verbindung verwendet, wenn die Vorrichtung (40) zwischen der drahtlosen Zugriffsschnittstelle und der zweiten Partei verbunden ist, und
Senden von Keepalive-Nachrichten an die zweite Partei (70) nach dem Erfassen des Einrichtens der Verbindung zwischen der ersten Partei (10) und der zweiten Partei (70), wenn der erfasste Typ der Anwendung und/oder des Diensts eine derartige vorbestimmte Anwendung und/oder ein derartiger vorbestimmter Diensttyp ist, für die bzw. den das Senden von Keepalive-Nachrichten angewendet wird.

18. Vorrichtung nach Anspruch 17, **dadurch gekennzeichnet, dass** die Vorrichtung (40) ein Proxy ist.

19. Vorrichtung nach Anspruch 17 oder 18, **dadurch gekennzeichnet, dass** die Vorrichtung (40) ein Gateway ist.

20. Computerprogrammprodukt, das einen Computerprogrammcode aufweist, **dadurch gekennzeichnet, dass** eine Ausführung des Programmcodes in einem Computer veranlasst, dass der Computer die folgenden Schritte durchführt:
Erfassen des Einrichtens einer Verbindung zwischen einer ersten Partei (10) und einer zweiten Partei (70) über eine drahtlose Zugriffsschnittstelle (21) und des Typs einer Anwendung und/oder eines Diensts, die bzw. der die eingerichtete Verbindung verwendet, wenn der Computer zwischen der drahtlosen Zugriffsschnittstelle und der zweiten Partei verbunden ist, und
Senden von Keepalive-Nachrichten an die zweite Partei (70) nach dem Erfassen des Einrichtens der Verbindung zwischen der ersten Partei (10) und der zweiten Partei, wenn der erfasste Typ der Anwendung und/oder des Diensts eine derartige vorbestimmte Anwendung und/oder ein derartiger vorbestimmter Diensttyp ist, für die bzw. den das Senden von Keepalive-Nachrichten angewendet wird.

## Revendications

1. Procédé pour maintenir une connexion dans un système de télécommunication, le procédé comprenant les étapes consistant à :
établir une connexion entre un terminal sans fil (10) et une autre partie (70), c'est-à-dire une seconde partie, à travers une interface d'accès sans fil (21) fournie par un réseau d'accès sans fil (20), et
envoyer des messages de maintien de connexion à la seconde partie (70) afin de maintenir la connexion, **caractérisé en ce que** le procédé comprend les étapes consistant à :
détecter, dans un élément de système (40) situé entre l'interface d'accès sans fil (21) et la seconde partie (70), l'établissement de la connexion entre le terminal sans fil (10) et la seconde partie, dans lequel la détection de l'établissement de la connexion comprend la détection d'un type d'une application et/ou d'un service qui utilise la connexion en cours d'établissement, et
envoyer des messages de maintien de connexion à la seconde partie (70) depuis ledit élément de système (40) après avoir détecté l'établissement de la connexion entre le terminal sans fil (10) et la seconde partie si le type détecté de l'application et/ou du service est un type d'application et/ou type de service prédéterminé tel que l'envoi de messages de maintien de connexion lui est appliqué.

2. Procédé selon la revendication 1, **caractérisé en ce que** le procédé comprend en outre l'envoi, au terminal sans fil (10) depuis ledit élément de système (40), d'instructions pour ne pas envoyer de messages de maintien de connexion à la seconde partie (70).

3. Procédé selon la revendication 1, **caractérisé en ce que** le procédé comprend en outre l'envoi, au terminal sans fil (10) depuis ledit élément de système (40), d'instructions pour envoyer des messages de maintien de connexion à la seconde partie (70) à une fréquence qui est inférieure à une fréquence minimale à laquelle les messages de de maintien de connexion doivent être envoyés pour maintenir la connexion.

4. Procédé selon la revendication 3, **caractérisé en ce que** le procédé comprend en outre les étapes consistant à :
recevoir dans ledit élément de système (40), lors de l'établissement de la connexion entre le terminal sans fil (10) et la seconde partie (70), un message provenant d'une entité de système (60) effectuant un contrôle d'appel, lequel message comprend des informations de cadencement indiquant la fréquence minimale à laquelle les messages de maintien de connexion doivent être envoyés pour maintenir la connexion,
modifier dans ledit élément de système (40) les informations de cadencement dans le message de telle sorte qu'elles indiquent une fréquence qui est inférieure à la fréquence minimale à laquelle des messages de maintien de connexion doivent être envoyés pour maintenir la connexion, et
transmettre le message modifié au terminal sans fil (10) depuis ledit élément de système (40).

5. Procédé selon la revendication 4, **caractérisé en ce que** l'entité de système (60) effectuant un contrôle d'appel comprend une fonction de contrôle d'état d'appel, et **en ce que** le message provenant de l'entité de système effectuant un contrôle d'appel est un message d'initialisation de session 200 OK.

6. Procédé selon l'une quelconque des revendications 1 à 5, **caractérisé en ce que** la détection de l'établissement de la connexion comprend en outre la détection d'un type d'une application et ou d'un service qui utilise la connexion en cours d'établissement, dans lequel l'envoi de messages de maintien de connexion à la seconde partie (70) depuis ledit élément de système (40) est effectué à une fréquence qui est déterminée sur la base du type détecté de l'application et/ou du service.

7. Système de télécommunication comprenant :
un réseau d'accès sans fil (20) fournissant une interface d'accès sans fil (21) pour des terminaux sans fil (10), et
un premier élément (70) du système de télécommunication,
dans lequel un terminal sans fil (10) peut établir une connexion avec le premier élément (70) via l'interface d'accès sans fil (21), **caractérisé en ce que** le système comprend en outre un second élément (40) du système de télécommunication situé entre l'interface d'accès sans fil (21) et le premier élément (70), dans lequel le second élément (40) comprend :
des moyens de détection adaptés pour détecter l'établissement de la connexion entre le terminal sans fil (10) et le premier élément (70), et un type d'une application et/ou d'un service qui utilise la connexion en cours d'établissement, et
des moyens d'envoi adaptés pour envoyer des messages de maintien de connexion au premier élément (70) après détection de l'établissement de la connexion entre le terminal sans fil et le premier élément si le type détecté de l'application et/ou du service est un type d'application et/ou de service prédéterminé tel que l'envoi de messages de maintien de connexion lui est appliqué.

8. Système de télécommunication selon la revendication 7, **caractérisé en ce que** le second élément (40) comprend en outre des moyens adaptés pour envoyer au terminal sans fil (10) des instructions pour ne pas envoyer de messages de maintien de connexion au premier élément (70).

9. Système de télécommunication selon la revendication 7, **caractérisé en ce que** le second élément (40) comprend en outre des moyens adaptés pour envoyer au terminal sans fil (10) des instructions pour envoyer des messages de maintien de connexion au premier élément (70) à une fréquence qui est inférieure à une fréquence minimale à laquelle des messages de maintien de connexion doivent être envoyés pour maintenir la connexion.

10. Système de télécommunication selon la revendication 9, **caractérisé en ce que** le second élément (40) comprend en outre :
des moyens adaptés pour recevoir, lors de l'établissement de la connexion entre le terminal sans fil (10) et le premier élément (70), un message provenant d'un élément de système (60) effectuant un contrôle d'appel, lequel message comprend des informations de cadencement indiquant la fréquence minimum à laquelle des messages de maintien de connexion doivent être envoyés pour maintenir la connexion,
des moyens adaptés pour modifier les informations de cadencement dans le message de sorte qu'elles indiquent une fréquence qui est inférieure à la fréquence minimale à laquelle des messages de maintien de connexion doivent être envoyés pour maintenir la connexion, et
des moyens adaptés pour transmettre le message modifié au terminal sans fil (10).

11. Système de télécommunication selon la revendication 10, **caractérisé en ce que** l'élément de système (60) effectuant un contrôle d'appel comprend une fonction de contrôle d'état d'appel, et **en ce que** le message provenant de l'élément de système (40) effectuant un contrôle d'appel est un message de protocole d'initialisation de session 200 OK.

12. Système de télécommunication selon l'une quelconque des revendications 7 à 11, **caractérisé en ce que**
les moyens de détection sont en outre adaptés pour détecter un type d'une application et/ou d'un service qui utilise la connexion en cours d'établissement, et
les moyens d'envoi sont adaptés pour envoyer des messages de maintien de connexion au premier élément (40) à une fréquence déterminée sur la base du type détecté de l'application et/ou du service.

13. Système de télécommunication selon l'une quelconque des revendications 7 à 12, **caractérisé en ce que** le système de télécommunication comprend un pare-feu (50) entre l'interface d'accès sans fil (21) et le premier élément (70), de sorte que le second élément (40) est situé entre l'interface d'accès sans fil (21) et le pare-feu (50).

14. Système de télécommunication selon l'une quelconque des revendications 7 à 13, **caractérisé en ce que** le premier élément (70) comprend un serveur d'application.

15. Système de télécommunication selon l'une quelconque des revendications 7 à 14, **caractérisé en ce que** le second élément (40) comprend un serveur proxy.

16. Système de télécommunication selon l'une quelconque des revendications 7 à 15, **caractérisé en ce que** le second élément (40) comprend une passerelle.

17. Appareil pour un système de télécommunication comprenant un réseau d'accès sans fil (20) fournissant une interface d'accès sans fil (21), **caractérisé en ce que** l'appareil (40) est adapté pour :
détecter l'établissement d'une connexion entre une première partie (10) et une seconde partie (70) à travers l'interface d'accès sans fil (21) et un type d'une application et/ou d'un service qui utilise la connexion en cours d'établissement lorsque l'appareil (40) est connecté entre l'interface d'accès sans fil (21) et la seconde partie, et
envoyer des messages de maintien de connexion à la seconde partie (70) après avoir détecté l'établissement de la connexion entre la première partie (10) et la seconde partie (70) si le type détecté de l'application et ou du service est un type d'application et/ou de service prédéterminé tel que l'envoi de messages de maintien de connexion lui est appliqué.

18. Appareil selon la revendication 17, **caractérisé en ce que** l'appareil (40) comprend un proxy.

19. Appareil selon la revendication 17 ou 18, **caractérisé en ce que** l'appareil (40) comprend une passerelle.

20. Produit de programme informatique comprenant un code de programme informatique, **caractérisé en ce que** l'exécution du code de programme dans un ordinateur amène l'ordinateur à exécuter les étapes suivantes :
détecter l'établissement d'une connexion entre une première partie (10) et une seconde partie (70) via une interface d'accès sans fil (21) et un type d'une application et/ou d'un service qui utilise la connexion en cours d'établissement lorsque l'ordinateur est connecté entre l'interface d'accès sans fil et la seconde partie, et
envoyer des messages de maintien de connexion à la seconde partie (70) après avoir détecté l'établissement de la connexion entre la première partie (10) et la seconde partie si le type détecté de l'application et/ou du service est un type d'application et/ou de service prédéterminé tel que l'envoi de messages de maintien de connexion lui est appliqué.
